# EUROPÄISCHE PATENTANMELDUNG

(11) **EP 3 231 593 A1**
(43) Veröffentlichungstag der Anmeldung: **18.10.2017**
(21) Anmeldenummer: 17166369.3
(22) Anmeldetag: 12.04.2017
(51) Int. Cl.: B30B 9/20, B30B 11/18, F26B 1/00, F26B 5/14, C02F 11/12, F26B 17/02, B30B 9/24, B30B 11/00

(54) **VORRICHTUNG UND EIN VERFAHREN ZUR BEHANDLUNG VON KLÄRSCHLAMM**

(30) Priorität: 15.04.2016 DE 102016107061
(71) Anmelder: Wenner, Christian, 84568 Pleiskirchen (DE)
(72) Erfinder: Wenner, Christian, 84568 Pleiskirchen (DE)
(74) Vertreter: K & H Bonapat Patentanwälte Koch · von Behren & Partner mbB

(57) **Zusammenfassung**

Die Erfindung betrifft eine Vorrichtung und ein Verfahren zur Behandlung von Klärschlamm umfassend eine Einlasseinheit und eine Behandlungseinheit, dadurch gekennzeichnet, dass die Behandlungseinheit mindestens ein Walzenpaar aus zwei nebeneinander liegenden Walzen umfasst, deren Längsachsen parallel zueinander ausgerichtet sind, und deren Drehsinn gegenläufiig ist, und die nach außen gerichteten Oberflächen der Walzen oder von über diese Walzen geführten Bändern Strukturen aufweisen die bei Berührung einer Walzenoberfläche und/oder Bandoberfläche mit jeweils der anderen Walzenoberfläche und/oder Bandoberfläche ineinandergreifen, und die so ausgestaltet ist, dass Klärschlamm, der durch die Einlasseinheit auf die Behandlungseinheit gegeben wird, bei Drehung der Walzen durch den Spalt zwischen den Walzen hindurchgepresst wird.

## Beschreibung

Die Erfindung betrifft eine Vorrichtung und ein Verfahren zur Behandlung, insbesondere zur Dosierung und Vereinzelung, von Klärschlamm, insbesondere von mechanisch vorentwässertem Klärschlamm, z.B. zur Aufbereitung des Schlammes zur Trocknung in einem Bandtrockner. Es wäre auch möglich, die Erfindung als "Klärschlammdosierungsvorrichtung" zu bezeichnen.

Für eine effektive Nutzung, Lagerung oder Entsorgung, Verbrennung/thermische Nutzung von Klärschlamm ist es von großem Vorteil, wenn dieser getrocknet wird. Da eine Trocknung zeit- und/oder energieaufwändig ist, wird dies in der Regel dadurch erreicht, dass die Klärschlämme zunächst mechanisch vorentwässert werden und danach die Masse dosiert bzw. vereinzelt wird, um kleinere, besser trocknende Einheiten zu schaffen.

Dies wird dadurch erreicht, dass der Klärschlamm zunächst mechanisch vorentwässert wird, z.B. in einer Presse oder durch die Führung mittels Filter- oder Siebbändern und dieser mechanisch vorentwässerte Klärschlamm einer Anlage zugeführt wird, die diesen verteilt bzw. dosiert.

Diese Anlagen bestehen zur Zeit aus einem Extruder oder zumindest aus einer Förderschnecke und einer Matrize (z.B. einem Sieb oder einem Filter), durch die der Klärschlamm unter hohem Druck gepresst wird.

Ein Nachteil des Standes der Technik ist, dass zähe oder harte Partikel (z.B. Steine, Haare, Kunststoffe, Folien und andere Fremdstoffe), welche eine gewisse Größe überschritten haben, die Matrize verstopfen. Dies führt zu einem sehr hohen Verschleiß und Wartungsaufwand, da diese Fremdstoffe manuell aus der Anlage entfernt werden müssen.

Zudem ist der Energieverbrauch, um den Schlamm durch die Matrizen zu pressen vergleichsweise hoch, da in der Regel Drücke von bis zu 50 bar nötig sind, was sich sowohl im Stromverbrauch der Extruder als auch im Verschleiß der Anlage widerspiegelt. So entstehen hohe Betriebskosten und kurze Wartungsintervalle.

Hinzu kommt, dass Extrudersysteme systembedingt (durch die Erzeugung hoher Drücke) größere Partikel entstehen lassen, was zu einer ineffektiveren Trocknung führt. Um Partikel zu verkleinern, müssen die Matrizenöffnungen verkleinert werden, was den oben beschriebenen Nachteil noch verstärkt.

Die Anlage des Standes der Technik erfordern somit vergleichsweise hohe Investitionskosten, hohe Betriebskosten und haben einen hohen Verschleiß.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist, eine einfache Behandlung von Klärschlamm vorzunehmen.

Zudem ist es bevorzugt, dass Anlagen möglichst störungsfrei und mit möglichst geringem Energie- und Wartungsaufwand arbeiten, um die Betriebskosten sowie das Betriebspersonal auf ein minimales Maß reduzieren zu können.

Des Weiteren kommt hinzu, dass mechanisch vorentwässerte Klärschlämme oft zwischengelagert und dann weiter transportiert und verladen werden, bei diesen Schritten ist es nicht auszuschließen, dass unter anderem Steine, Hölzer oder andere Fremdstoffe mit aufgenommen werden, die bei einer späteren Vereinzelung berücksichtigt werden müssen.

Diese Aufgabe wird durch eine Vorrichtung und ein Verfahren gemäß den Ansprüchen gelöst.

Die erfindungsgemäße Vorrichtung zur Behandlung von Klärschlamm umfasst eine Einlasseinheit und eine Behandlungseinheit, und ist dadurch gekennzeichnet, dass die Behandlungseinheit mindestens ein Walzenpaar aus zwei nebeneinander liegenden Walzen umfasst, deren Längsachsen parallel zueinander ausgerichtet sind, und deren Drehsinn gegenläufig ist, und die nach außen gerichteten Oberflächen der Walzen oder von über diese Walzen geführten Bändern Strukturen aufweisen die bei Berührung einer Walzenoberfläche/Bandoberfläche mit jeweils der anderen Walzenoberfläche/Bandoberfläche ineinandergreifen, und die so ausgestaltet ist, dass Klärschlamm, der durch die Einlasseinheit auf die Behandlungseinheit gegeben wird, bei Drehung der Walzen durch den Spalt zwischen den Walzen hindurchgepresst wird.

Das erfindungsgemäße Verfahren zur Behandlung von Klärschlamm, insbesondere mit einer solchen Vorrichtung, umfasst die Schritte:
- Zuführung von (insbesondere mechanisch) vorentwässertem Klärschlamm,
- Führung des Klärschlamms zwischen zwei parallel verlaufende Oberflächen, die Strukturen aufweisen, welche ineinandergreifen,
- Durchführung des Klärschlamms durch diese Strukturen der Oberflächen mittels gleichgerichteter Bewegung der Oberflächen.

Einlasseinheiten sind dem Fachmann bekannt. Die einfachste Einlasseinheit ist eine Öffnung (z.B ein Aufsatztrichter), durch die der Klärschlamm hindurchfallen oder hindurchgeführt werden kann. Die Einlasseinheiten können jedoch auch Zuführungseinheiten wie z.B. Greifer, bewegte Behältnisse, Förderschnecken oder Förderbänder umfassen.

Bei einer Ausführungsform, bei der die Behandlungseinheit mindestens ein Band umfasst, kann dieses Band auch zur Zuführung des Klärschlamms verwendet werden. Die Einlasseinheit umfasst in diesem bevorzugten Falle eine Öffnung und ggf. auch die Fördereinheiten für dieses Band. Eine Fördereinheit, die insbesondere oberhalb der Walzen endet, hat den Vorteil, dass sie eine geregelte Materialversorgung und dadurch einen gleichmäßigen Klärschlammeinzug gewährleistet.

Bevorzugt ist die Fördereinheit zusätzlich dazu ausgelegt, zumindest temporär durch Regelung der Zuführung oder gar durch eine Rückführung des Klärschlamms einen geringen Druck zu erzeugen, der die Dosierqualität, zumindest temporär, verbessert.

Die Behandlungseinheit ist das Herzstück der Vorrichtung. Im Gegensatz zu dem Stand der Technik, der sich einer Matrix (z.B. einem Filter oder Sieb) bedient, ermöglicht die Behandlungseinheit der Erfindung eine aktive Förderung des Klärschlamms.

Erfindungsgemäß umfasst die Behandlungseinheit dazu mindestens zwei einander gegenüberliegende Walzen, deren Längsachsen parallel zueinander ausgerichtet sind. Auch wenn die Dimensionierung dieser Walzen zunächst unerheblich ist, ist es bevorzugt, wenn die Stirnseiten der Walzen auf zwei parallelen Ebenen liegen, die Walzen also gleichlang sind und bezüglich ihrer Positionierung seitlich miteinander bündig abschließen. Ebenfalls bevorzugt ist, wenn die Walzen den gleichen Radius aufweisen.

Gemäß einer bevorzugten Ausführungsform ist die Vorrichtung so ausgestaltet, dass sie das hineingegebene Material durch Knetung umformt. So ist es bevorzugt, dass die Oberflächen keine Zähne oder andere Protrusionen aufweisen, die das Material zerreißen, sondern vorwiegend gleichmäßig geformt sind, in dem das Material zerdrückt und zu einem Strang oder gleichmäßig gestalteter Pellets umgeformt wird.

Selbstverständlich werden die Walzen mit einer Antriebseinheit (z.B. einem Motor) aktiv bewegt. Dabei kann vorgesehen sein, dass die beiden Walzen eines Walzenpaares über ein Getriebe synchronisiert sind oder jede Walze eines Walzenpaares von einer eigenen Antriebseinheit angetrieben wird.

Der erfindungsgemäße Effekt wird dadurch erzielt, dass der Klärschlamm durch (mindestens) einen Spalt mittels beweglicher Oberflächen hindurchgeführt wird, wobei diese Oberflächen die geforderte Strukturierung aufweisen. Durch gegenläufigen Drehsinn der Walzen werden sich die jeweiligen Oberflächen parallel zueinander bewegen. Es ist dabei selbstverständlich, dass die Bewegung in den Spalt vom Einlass weg gerichtet ist.

Auch wenn es bevorzugt ist, dass die Geschwindigkeit der beiden Oberflächen gleich ist, kann es für einige Anwendungen auch von Vorteil sein, wenn die Geschwindigkeit unterschiedlich ist (z.B. die Geschwindigkeit der einen Oberfläche zwischen 80 % und 99% der anderen Oberfläche liegt), um Scherkräfte gezielt auszunutzen. Auch ist es je nach Anwendung bevorzugt, wenn die Geschwindigkeit zumindest einer Oberfläche gesteuert oder geregelt werden kann.

Bevorzugt umfasst die Vorrichtung einen Antrieb der Walzen, wobei die Walzen mit gleicher oder (ggf. regelbarer) ungleicher Geschwindigkeit angetrieben werden.

Die genannten Oberflächen können die Oberflächen der Walzen selber sein oder die Oberflächen von Bändern, die mittels dieser Walzen geführt oder sogar aktiv bewegt werden. Dabei sind mit dem Begriff "Oberfläche" selbstverständlich diejenigen Oberflächen gemeint, die einander zugewandt sind und in Kontakt mit dem Klärschlamm kommen.

Gemäß einer bevorzugten Ausführungsform umfassen die Walzen die betreffenden Oberflächen. Diese Ausführungsform ermöglichen eine sehr einfache, kompakte und wartungsarme Bauform.

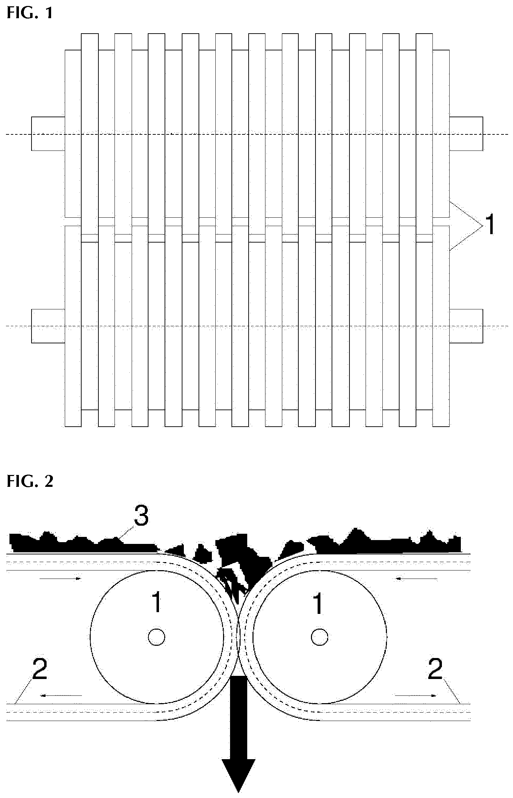

Besonders bevorzugt sind Walzen mit einer alternierenden Riffelung längs ihrer Länge (s. dazu auch Fig. 1). Diese Walzen können zwar als Drehteil hergestellt werden, eine sehr günstige Ausführungsform betrifft Walzen, die aus Einzelscheiben unterschiedlicher Durchmesser (insbesondere mit jeweils zwischen mindestens zwei unterschiedlichen Werten alternierendem Durchmesser hergestellt sind.

Bevorzugt sind generell Oberflächen mit Federn, die in Nuten auf der gegenüberliegenden Oberfläche eingreifen, wobei die Federn/Nuten parallel zur Länge (Blech) oder dem Umfang (Walze) verlaufen oder in einem Winkel kleiner als 45° (oder gar kleiner als 30°) dazu geneigt.

Gemäß einer anderen Ausführungsform umfasst die Vorrichtung Bänder, die mittels der Walzen geführt oder gar aktiv bewegt werden und die diese Oberflächen aufweisen. Diese Bänder können aus einem homogenen Bandmaterial bestehen oder aber einzelne Segmente umfassen (ähnlich einer Raupenkette). Diese Ausführungsform hat den Vorteil, dass die Zuführung mittels dieser Bänder erfolgen kann. Zudem kann aber auch die Vorentwässerung auf diesen Bändern durchgeführt werden, z.B. wenn diese Bänder zusätzlich durch eine Presswalzenvorrichtung geführt werden (die insbesondere ebenfalls Teil der Vorrichtung sein kann) und/oder Durchlässe enthalten, durch die Wasser abgeleitet werden kann.

Die Gerade durch die Mittelpunkte beide Drehachsen des Walzenpaares kann im Grunde beliebig im Raum ausgerichtet sein. Die Walzen können also in verschiedenen Winkeln zueinander im Raum angeordnet werden, sofern die zueinander parallele Ausrichtung der Drehachsen bestehen bleibt. Insbesondere bezüglich der Vertikalen sind hier die Waagerechte (beide Walzen nebeneinander) und die Senkrechte (beide Walzen übereinander) bevorzugt. Es sind jedoch je nach Ausführung auch andere Orientierungen von Vorteil. Beispielsweise könnte bei einer Verwendung von zwei Walzenpaaren eine V-förmige Anordnung vorteilhaft sein.

Bevorzugte Materialien für die Walzen oder Bänder sind Metalle, insbesondere korrosionsbeständig/gehärtet, Kunststoffe oder Keramiken.

Die besagten Strukturen auf den Oberflächen ermöglichen eine Verteilung oder Dosierung des Klärschlamms. Auch wenn die Form und Anordnung der Strukturen beliebig sein kann, ist es jedoch wichtig, dass die Strukturen auf den beiden Oberflächen so ausgeführt sind, dass sie die bei Berührung der beiden gegengerichteten Oberflächen ineinandergreifen. Dies bedeutet, dass zumindest die Ränder der Strukturen auf der einen Oberfläche jeweils negativ geformten Rändern einer entsprechenden Form gegenüberliegen müssen.

Die Tiefe bzw. die Höhe der Strukturen ist abhängig vom zu behandelnden Klärschlamm. Da es insbesondere bei periodischen Strukturen wie z.B. Rillen schwierig ist, die Position der Oberfläche anzugeben, wird im Folgenden zur Verbesserung des Verständnisses von dem Fall ausgegangen, dass die Strukturen Ausnehmungen aus einer Oberfläche sind, also lediglich von einer Tiefe gesprochen wird. Diese Tiefe ist bezüglich ihres Betrages gleichbedeutend mit einer Strukturhöhe in dem Falle dass die Strukturen aus Aufbringungen auf eine Oberfläche bestehen.

Die Tiefe der Strukturen ist vorzugsweise größer als 1 mm, insbesondere > 1 cm, aber bevorzugt kleiner als 1/3 des Radius der Walze (insbesondere kleiner als 1/5 des Radius).

Die Walzen sind vorzugsweise so zueinander positioniert, dass in der Grundposition die äußersten Punkte der einen Oberfläche näher an der Achse der gegenüberliegenden Walze liegen als die äußersten Punkte der gegenüberliegenden Oberfläche. Für eine Ausführungsform mit zwei Walzen mit Ausnehmungen als Strukturen würde dies bedeuten, dass der Abstand ihrer Drehachsen kleiner ist als die addierten Radien. Auf diese Weise greifen die Strukturen ineinander ein.

Die Grundposition ist die Position, in der die Walzen bestimmungsgemäß zueinander positioniert sind. Der Abstand kann jedoch bei einigen Ausführungsformen während des Betriebs variieren.

Vorteil der Erfindung ist, dass Schlämme selbstständig und mit sehr wenig nötigem Druck eingezogen werden. Dies wird durch die Führung zwischen den beiden bewegten Oberflächen ermöglicht. Durch die runde Form der Walzen und die dadurch resultierende Form des Spalts zwischen diesen werden kleinere Fremdstoffe einfach zerkleinert oder hindurch gezogen.

Durch das Walzenprofil muss kein hoher Druck aufgebaut werden, was einen geringen Stromverbrauch und einen verschleißarmen Betrieb ermöglicht. Dadurch ist die erfindungsgemäße Vorrichtung nicht wartungsintensiv.

Gemäß einer bevorzugten Ausführungsform weist mindestens eine der Oberflächen an mindestens eine ihrer Seiten, insbesondere an beiden Seiten eine Abdichtung auf. Diese Abdichtung wird bevorzugt aus einer Lippe eines Dichtungsmaterials gebildet oder einer Nute, in die eine in der Vorrichtung befindliche stationäre Lippe eines Dichtungsmaterials eingreifen kann.

Dies hat den Vorteil einer seitlichen Abdichtung der Oberfläche, die selbst während eines Auseinanderschiebens der Walzen bestehen bleibt.

Die Struktur der Oberflächen umfasst insbesondere Strukturen der Gruppe Nuten längs des Umfangs oder zumindest zur Längsachse geneigt (zur strangförmigen Dosierung des Klärschlamms), Nuten parallel zur Längsachse (strangförmige Stückelung), Eindrücke auf der einen Oberfläche, Protrusionen auf der gegenüberliegenden Oberfläche (Pelletformung) und mäanderförmige Strukturen. Die Ränder der Strukturen können glatt oder geriffelt sein, wobei letzteres die Oberfläche des dosierten Klärschlamms vergrößert und damit eine Trocknung verbessert.

Die Durchmesser sowie die Profile der Strukturen sind im Grunde frei wählbar, um geeignete Größen und Formen des verteilten Klärschlamms zu erzeugen. Die Breite der Strukturen liegt bevorzugt im Bereich zwischen 0,1 cm und 10 cm, insbesondere zwischen 0,5 cm und 5 cm. Der Querschnitt der Strukturen ist bevorzugt rechteckig, halbrund oder dreieckig.

Gemäß einer bevorzugten Ausführungsform umfasst die Oberfläche längliche Kerben (z.B. Riffelwalzen) dies ermöglicht einen besseren Einzug des Klärschlamms. Die Oberflächen sind jedoch bevorzugt so beschaffen, dass aus ihnen keine Protrusionen herausragen oder wenn Protrusionen herausragen, diese in Ausnehmungen der gegenüberliegenden Oberfläche auf vier Seiten formschlüssig eingreifen. Es liegen bevorzugt insbesondere auch keine Zahnungen vor, die in eine Gegenzahnung eingreifen.

Allgemein bedeutet dies in dem Falle, in dem die strukturierte Oberfläche die Oberfläche der Walze ist, dass bezüglich jedes Querschnitts die Bereiche, bei denen der Umfang den größten Radius aufweist, mehr als 70% des Gesamtumfangs je Querschnitt ausmachen und die übrigen Umfangsbereiche einen kleineren Radius aufweisen (Einkerbungen), und/oder dass bevorzugt die Bereiche eines jeden Querschnitts mit größtem Radius über mehr als 20° (bevorzugt mehr als 40°) des Umfangs zusammenhängende Bereiche darstellen. Im Hinblick auf Bänder bedeutet dies, dass bezüglich jedes Schnitts parallel zur Länge eines Bandes bevorzugt die Bereiche größter Höhe mindestens über eine Länge zusammenhängen, die mehr als 20° (bevorzugt mehr als 40°) des Umfangs der Walze entsprechen, über die dieses Band geführt wird.

Gemäß einer bevorzugten Ausführungsform ist mindestens eine der Walzen eines Walzenpaares beweglich ausgestaltet, so dass ihre Längsachse parallel zu einer Geraden oder Kreisbahn durch die Mittelpunkte der beiden Längsachsen des Walzenpaares verschoben werden kann. Es ist von Vorteil, wenn diese Verschiebung zu einer Vergrößerung des Abstandes der beiden Walzen des Walzenpaares führt, da auf diese Weise in dem Falle, dass große Partikel zwischen die Walzen geraten, diese durch Vergrößerung des Spaltes zwischen den Walzen hindurchtreten können. Dies verringert die Gefahr von Verstopfungen. Haare, Plastik, Folien, Steine, Hölzer, Metallgegenstände usw. die im Klärschlamm vorhanden sind, wirken sich bei einer solchen Ausführungsform nicht störend aus, da diese ebenso eingezogen, durchgeführt und unten ggf. durch die Abstreifer abgeschabt werden.

Die Bewegung der Walzen relativ zueinander kann dermaßen realisiert sein, dass bezüglich der Vorrichtung eine der Walzen beweglich ist oder beide Walzen.

Bei einer Verwendung von Riffelwalzen haken sich größere Fremdstoffe im Walzenprofil ein, drücken die Walzen auseinander und fallen so hindurch.

Gemäß einer bevorzugten Ausführungsform umfasst die Vorrichtung mindestens eine Spannfeder, die so angeordnet ist, dass sie mindestens eine der beweglichen Walzen wieder in ihre Ausgangsposition absolut oder relativ zu der gegenüberliegenden Walze bewegen kann. Diese Spannfeder ist insbesondere entweder an einem stationären Gehäuseteil der Vorrichtung befestigt (absolute Rückstellung) oder an der Achse der anderen Walze (relative Rückstellung).

Die Spannfeder erzeugt eine Vorspannung, die bei einem Auseinanderdrücken der Walzen ansteigt, sodass die bewegliche Walze nur bei einer bestimmten Belastung, die von eingezogenen Objekten stammt, kurz öffnet und anschließend durch die Spannfeder automatisch wieder schließt und so die Ausgangsform wieder herstellt. Dadurch läuft die Vorrichtung selbstständig ohne Ausfall weiter.

Gemäß einer alternativen Ausführungsform kann die Funktion der Spannfeder auch durch aktive Bewegungselemente übernommen werden, z.B. durch Elektromotoren, die mit einer Steuereinheit und einem die großen Partikel erkennenden Sensor gekoppelt sind.

Gemäß einer bevorzugten Ausführungsform umfasst die Vorrichtung einen Sensor, der eine laterale Bewegung (Auseinanderschieben) mindestens einer der Walzenpaare erkennt, und bevorzugt zusätzlich eine Einheit, die die Signale des Sensors verarbeitet und Bewegungen der Walze zur Dokumentation oder Statistik abspeichert oder ggf. einen Alarm ausgibt.

Es ist insbesondere bevorzugt, dass bei Erkennen eines Auseinanderschiebens der Walzen eine besondere Auffangeinheit zu dem Auslass bewegt wird, der den Klärschlamm zusammen mit den störenden Fragmenten auffängt und separat entsorgt.

Je nach Ausführung kann es auch vorteilhaft sein, dass die Information des Sensors bei einem Auseinanderschieben einen Stopp der Vorrichtung bewirkt, und so nachgeschaltete Prozesse gegen Fremdstoffe schützt.

Gemäß einer bevorzugten Ausführungsform umfasst die Vorrichtung zusätzlich mindestens eine Linearführung, z.B. eine Gleitschiene, in der ggf. bewegliche Walzen beim Öffnen geführt werden und beim Schließen wieder in die Ausgangslage gebracht werden. Diese Linearführung greift insbesondere an den Drehachsen der Walzen eines Walzenpaares an.

Gemäß einer bevorzugten Ausführungsform umfasst die Vorrichtung mindestens eine Achse mit jeweils einem Zahnrad an ihren Stirnseiten und mindestens zwei Zahnstangen, in denen diese Zahnräder laufen, wobei die Länge der Achse bevorzugt der Länge der Drehachse mindestens einer Walze entspricht. Bevorzugt ist jeder relativ zur Vorrichtung beweglichen Walze eine solche Zahnradachse zugeordnet und greift an der jeweiligen Drehachse an.

Dies hat den Vorteil, dass durch die starre Zahnachse und den Eingriff in die Zahnstangen bei einer lateralen Bewegung der Walze die Drehachse dieser Walze exakt parallel zu ihrer Ausgangslage ausgerichtet bleibt und ein Verkanten verhindert wird.

Wird ein Fremdstoff außermittig eingezogen und die bewegliche Walze dadurch verschoben, so sorgt die Zahnstange dafür, dass die Walze stets parallel zu ihrer Ausgangslage bewegt wird.

Die Zahnstangen sorgen dafür, dass seitlich auftretende Kräfte die bewegliche Walze gleichmäßig auffedern lassen und kein seitlicher Versatz möglich ist.

Gemäß einer bevorzugten Ausführungsform umfasst die Vorrichtung eine Bewegungseinheit zur aktiven lateralen Bewegung mindestens einer der Walzen (insbesondere in Richtung des Auseinanderschiebens). Bevorzugt ist dabei diese Bewegungseinheit so ausgestaltet, dass mindestens eine bewegliche Walze nach einer voreingestellten Zeit X bewegt wird, um Fremdstoffe, die z.B. kein automatisches Auseinanderschieben der Walzen bewirkt haben, zu entfernen.

Gemäß einer bevorzugten Ausführungsform umfasst die Vorrichtung einstellbare Anschläge, die ein weiteres Auseinanderbewegen der Walzen eines Walzenpaares verhindern. Auf diese Weise kann die maximale Partikelgröße bzw. die maximale Öffnung des Walzenspaltes eingestellt werden.

Gemäß einer bevorzugten Ausführungsform umfasst die Vorrichtung einen aktiven und/oder variablen Auslass. Dieser Auslass umfasst insbesondere Fördereinheiten zur aktiven Abführung des behandelten Klärschlamms, kann aber auch Rutschen oder Schütten oder Behältnisse umfassen. bevorzugt ist eine relative Bewegung eines Walzenpaares zu dem Auslass, so dass unterschiedliche Auslasswege oder Behältnisse gewählt und mit behandeltem Klärschlamm beschickt werden können. Bevorzugt entspricht die Breite eines Auslasselements der Breite des Walzenpaares dessen Klärschlamm es abführt.

Bevorzugt ist ein schwenkbares Förderband, das zur variablen Weiterleitung (z.B. zur Verteilung auf einem Bandtrockner) oder Verfüllung unterschiedlicher Behältnisse verschwenkt werden kann.

Gemäß einer bevorzugten Ausführungsform umfasst die Vorrichtung, insbesondere für jede der Oberflächen, mindestens ein Reinigungselement.

Ein solches Reinigungselement kann ein Abstreifer sein, der dazu ausgestaltet ist, dass klebriger Klärschlamm, der in das Profil der Oberfläche gepresst wurde, abgelöst wird.

Der Abstreifer ist bevorzugt federbelastet ausgeführt und vorzugsweise im Verhältnis der Walze gegenüber des Einlasses angeordnet, was das Ablösen der abgeschabten Partikel verbessert, und die Standzeit erhöht.

Ein solches Reinigungselement kann aber auch (insbesondere in Kombination mit einem Abstreifer) eine Reinigungsdüse sein.

Selbstverständlich ist die Vorrichtung im Grunde zur Behandlung von allen Substraten geeignet, die eine Konsistenz ähnlich von (mechanisch) vorentwässertem Klärschlamm aufweisen.

Beispiele für bevorzugte Ausführungsformen der erfindungsgemäßen Vorrichtung sind in den Abbildungen dargestellt.
Figur 1 zeigt schematisch ein bevorzugtes Walzenpaar in Aufsicht.
Figur 2 zeigt schematisch eine bevorzugte Ausführungsform mit Bändern in Seitenansicht.
Figur 3 zeigt schematisch eine bevorzugte Ausführungsform mit einer beweglichen Walze in Aufsicht.
Figur 4 zeigt schematisch eine bevorzugte Ausführungsform in Seitenansicht.
Figur 5 zeigt eine bevorzugte Riffelwalze.

Figur 1 zeigt schematisch ein bevorzugtes Walzenpaar in Aufsicht. Die Walzen liegen nebeneinander, wobei deren Längsachsen parallel zueinander ausgerichtet sind. Zur Durchführung von Klärschlamm, ist deren Drehsinn gegenläufig, so dass bei dieser Aufsicht die innenliegenden Seiten der Walzen 1 sich nach unten bewegen würden. In diesem Falle sind die Oberflächen der Walzen strukturiert und greifen im Bereich der Berührung ineinander, so dass die Strukturen sichtbar überlappen.

Figur 2 zeigt schematisch eine bevorzugte Ausführungsform mit Bändern 2 in Seitenansicht. In dieser Ausführungsform ist nicht die Oberfläche der Walzen 1 strukturiert, sondern die Oberfläche von Bändern 2, die über die Walzen geführt werden. Selbstverständlich ist es auch denkbar, eine Walze mit strukturierter Oberfläche mit einem strukturierten Band zu kombinieren.

Die Bänder 2 bewegen sich in Richtung der Pfeile, so dass sie sich in der Mitte, wo die Strukturen ineinandergreifen, nach unten bewegen. Klärschlamm 3, welcher von den Bändern 2 herangeführt wird, gerät in der Mitte zwischen die Bänder 2 und wird nach unten hin durch die Strukturierung verteilt.

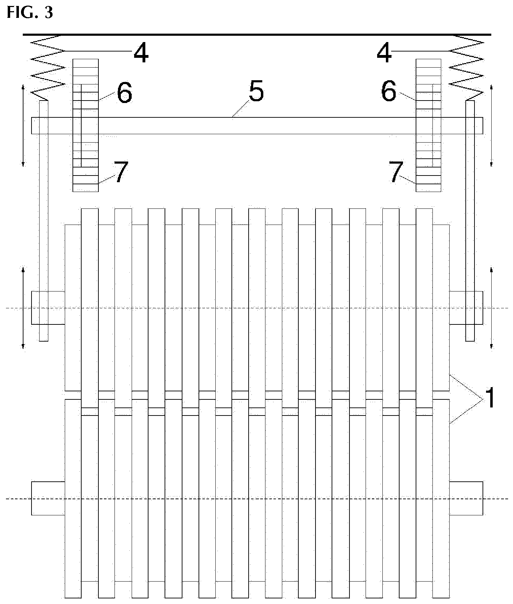

Figur 3 zeigt schematisch eine bevorzugte Ausführungsform mit einer beweglichen Walze 1 in Aufsicht. Geraten größere Partikel zwischen die Walzen 1 kann sich die eine (hier diejenige oben im Bild) längs der Pfeile bewegen. Zum Zurückdrücken der Walze dienen in diesem Beispiel die beiden Spannfedern 4. Um ein Verkanten der Achse der Walze 1 zu verhindern ist diese (selbstverständlich ohne ihre Drehung zu behindern) mit einer weiteren Zahnradachse 5 verbunden, auf der die Zahnräder 6 starr zueinander angeordnet sind, und in Zahnstangen 7 eingreifen.

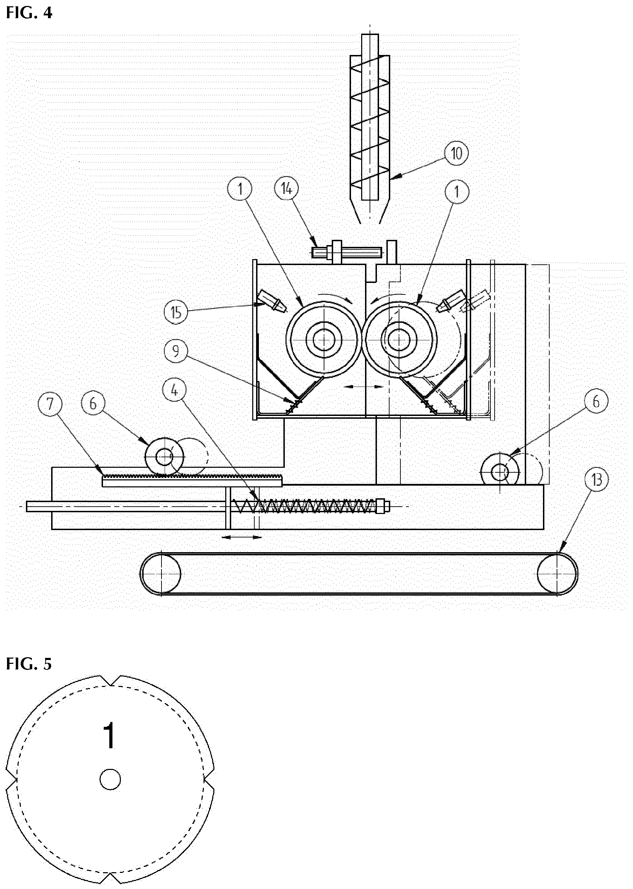

Figur 4 zeigt schematisch eine bevorzugte Ausführungsform in Seitenansicht. Hier wird das Herzstück wieder durch zwei Walzen 1 mit einer strukturierten Oberfläche gebildet, wobei die rechte Walze im Bild beweglich ausgestaltet ist, so dass sie wie in Figur 3 mittels einer Spannfeder 4 zurückgestellt wird und deren Achsorientierung durch die Zahnräder 6 und die Zahnstangen 7 stabilisiert wird. Bei einem Auseinanderschieben der Walzen 1 wird z.B. die gestrichelt dargestellte Position erreicht.

Unter den Walzen befinden sich zwei Abstreifer 9, die Klärschlamm entfernen, welches in den Strukturen festgeklebt ist. Neuer Klärschlamm wird durch eine Zuführung 10, hier z.B. eine Förderschnecke oder ein Extruder, der Vorrichtung zugeführt. Über ein Förderband 13 kann behandelter Klärschlamm fortgeführt werden, wobei das Förderband 13 bevorzugt orthogonal zur Bildebene gedreht werden kann, um verschiedene Auslässe oder Behältnisse zu bedienen. Ein Anschlag 14 verhindert ein zu enges Schließen der Walzen, da es von Vorteil ist, wenn sich zwischen den Walzen, bzw. den Strukturen stets ein kleiner Spalt befindet. Die Walzen können zudem mittels Reinigungsdüsen 15 gereinigt werden.

Die Walzen ziehen den unförmigen Klärschlamm (wie z. B. feuchte Substrate, Papierschlamm, Gärrest, Rostasche, Lignin, Sägemehl, usw.) ein und formen ihn zu dünnen Fäden. Kleine Fremdkörper werden dabei zermahlen und stören so nicht die Portionierung der Schlämme.

Figur 5 zeigt eine bevorzugte Riffelwalze in Seitenansicht. Die Riffelungen bestehen hier aus dreieckigen Kanälen, die längs der Walzenachse verlaufen (oben, rechts, unten und links angedeutet).

## Patentansprüche

1. Vorrichtung zur Behandlung von Klärschlamm umfassend eine Einlasseinheit und eine Behandlungseinheit, **dadurch gekennzeichnet, dass** die Behandlungseinheit mindestens ein Walzenpaar aus zwei nebeneinander liegenden Walzen umfasst, deren Längsachsen parallel zueinander ausgerichtet sind, und deren Drehsinn gegenläufig ist, und die nach außen gerichteten Oberflächen der Walzen oder von über diese Walzen geführten Bändern Strukturen aufweisen die bei Berührung einer Walzenoberfläche und/oder Bandoberfläche mit jeweils der anderen Walzenoberfläche und/oder Bandoberfläche ineinandergreifen, und die so ausgestaltet ist, dass Klärschlamm, der durch die Einlasseinheit auf die Behandlungseinheit gegeben wird, bei Drehung der Walzen durch den Spalt zwischen den Walzen hindurchgepresst wird.

2. Vorrichtung nach Anspruch 1, **dadurch gekennzeichnet, dass** beide Walzen eines Walzenpaares die betreffenden Oberflächen umfassen oder ein Walzenpaar zwei Bänder umfasst, die mittels der Walzen geführt oder gar aktiv bewegt werden und die diese Oberflächen aufweisen.

3. Vorrichtung nach einem der vorangehenden Ansprüche, **dadurch gekennzeichnet, dass** mindestens eine der Oberflächen an mindestens eine ihrer Seiten, insbesondere an beiden Seiten eine Abdichtung aufweist, wobei diese Abdichtung bevorzugt aus einer Lippe eines Dichtungsmaterials gebildet wird oder einer Nute gebildet wird, in die eine in der Vorrichtung befindliche stationäre Lippe eines Dichtungsmaterials eingreifen kann.

4. Vorrichtung nach einem der vorangehenden Ansprüche, **dadurch gekennzeichnet, dass** in dem Falle, in dem eine strukturierte Oberfläche die Oberfläche einer Walze ist, bezüglich jedes Querschnitts der Walze die Bereiche, bei denen der Umfang den größten Radius aufweist, mehr als 70% des Gesamtumfangs je Querschnitt ausmachen und die übrigen Umfangsbereiche einen kleineren Radius aufweisen und/oder die Bereiche eines jeden Querschnitts mit größtem Radius über mehr als 20° des Umfangs zusammenhängende Bereiche darstellen,
und dass in dem Falle, in dem eine strukturierte Oberfläche die Oberfläche eines Bandes ist, bezüglich jedes Schnitts parallel zur Länge eines Bandes die Bereiche größter Höhe mindestens über eine Länge zusammenhängen, die mehr als 20° des Umfangs der Walze entsprechen, über die dieses Band geführt wird.

5. Vorrichtung nach einem der vorangehenden Ansprüche, **dadurch gekennzeichnet, dass** mindestens eine der Walzen eines Walzenpaares beweglich ausgestaltet ist, so dass ihre Längsachse parallel zu einer Geraden oder Kreisbahn durch die Mittelpunkte der beiden Längsachsen des Walzenpaares verschoben werden kann, wobei diese Verschiebung zu einer Vergrößerung des Abstandes der beiden Walzen des Walzenpaares führt, wobei die Vorrichtung bevorzugt zusätzlich mindestens eine Spannfeder umfasst, die so angeordnet ist, dass sie mindestens eine der beweglichen Walzen wieder in ihre Ausgangsposition absolut oder relativ zu der gegenüberliegenden Walze bewegen kann und/oder die Vorrichtung bevorzugt zusätzlich aktive Bewegungselemente umfasst, welche diese Funktion übernehmen.

6. Vorrichtung nach einem der vorangehenden Ansprüche, **dadurch gekennzeichnet, dass** die Vorrichtung einen Sensor umfasst, der ein Auseinanderschieben mindestens eines der Walzenpaare erkennt, und bevorzugt zusätzlich eine Einheit, die die Signale des Sensors verarbeitet und Bewegungen der Walze zur Dokumentation oder Statistik abspeichert oder ggf. einen Alarm ausgibt, wobei insbesondere bevorzugt ist, dass bei Erkennen eines Auseinanderschiebens der Walzen eine besondere Auffangeinheit zu dem Auslass bewegt wird, der den Klärschlamm zusammen mit den störenden Fragmenten auffängt und separat entsorgt und/oder dass die Information des Sensors bei einem Auseinanderschieben einen Stopp der Vorrichtung bewirkt, und so nachgeschaltete Prozesse gegen Fremdstoffe schützt.

7. Vorrichtung nach einem der vorangehenden Ansprüche, **dadurch gekennzeichnet, dass** die Vorrichtung zusätzlich mindestens eine Linearführung umfasst, mittels derer bewegliche Walzen beim Öffnen und Schließen geführt werden, wobei die Vorrichtung insbesondere mindestens eine Achse mit jeweils einem Zahnrad im Bereich ihrer Stirnseiten und mindestens zwei Zahnstangen umfasst, in denen diese Zahnräder laufen, wobei die Länge der Achse bevorzugt der Länge der Drehachse mindestens einer Walze entspricht, wobei bevorzugt jeder relativ zur Vorrichtung beweglichen Walze eine solche Zahnradachse zugeordnet ist und an der jeweiligen Drehachse angreift.

8. Vorrichtung nach einem der vorangehenden Ansprüche, **dadurch gekennzeichnet, dass** die Vorrichtung eine Bewegungseinheit zur aktiven lateralen Bewegung mindestens einer der Walzen umfasst, wobei diese Bewegungseinheit bevorzugt so ausgestaltet ist, dass mindestens eine bewegliche Walze nach einer voreingestellten Zeit X bewegt wird, um Fremdstoffe, die z.B. kein automatisches Auseinanderschieben der Walzen bewirkt haben, zu entfernen.

9. Vorrichtung nach einem der vorangehenden Ansprüche, **dadurch gekennzeichnet, dass** sie mindestens ein Reinigungselement für mindestens eine der Oberflächen umfasst, wobei bevorzugte Reinigungselemente Reinigungsdüsen und/oder Abstreifer sind, die dazu ausgestaltet sind, dass klebriger Klärschlamm, der in das Profil der Oberfläche gepresst wurde, abgelöst wird.

10. Verfahren zur Behandlung von Klärschlamm mit einer Vorrichtung nach einem der vorangehenden Ansprüche, umfassend die Schritte:
- Zuführung von (insbesondere mechanisch) vorentwässertem Klärschlamm,
- Führung des Klärschlamms zwischen zwei parallel verlaufende Oberflächen, die Strukturen aufweisen, welche ineinandergreifen,
- Durchführung des Klärschlamms durch diese Strukturen der Oberflächen mittels gleichgerichteter Bewegung der Oberflächen.
